# EUROPÄISCHE PATENTSCHRIFT

(11) **EP 1 403 123 B1**
(45) Veröffentlichungstag und Bekanntmachung des Hinweises auf die Patenterteilung: **13.02.2008**
(21) Anmeldenummer: 03018210.9
(22) Anmeldetag: 09.08.2003
(51) Int. Cl.: B60K 23/08

(54) **Verfahren zur Regelung des Fahrverhaltens mittels Einflussnahme auf die Regelung der Längssperre für eine feste Momentenverteilung**
Method for adjusting driving properties by influencing longitudinal coupling in order to achieve fixed torque distribution
Méthode de régulation du comportement routier pour une distribution fixe du couple sur l'accouplement longitudinal

(30) Priorität: 26.09.2002 DE 10245033
(43) Veröffentlichungstag der Anmeldung: 31.03.2004
(73) Patentinhaber: Dr.Ing. h.c. F. Porsche Aktiengesellschaft, 70435 Stuttgart (DE)
(72) Erfinder: Bastian, Klaus, 75242 Neuhausen (DE); Frank, Jan, 75203 Königsbach-Stein (DE); Hofbauer, Markus, 73098 Rechberghausen (DE)

(56) Entgegenhaltungen:
- EP-A- 1 203 687
- DE-A1- 4 112 638
- DE-A1- 19 523 354

## Beschreibung

Die vorliegende Erfindung betrifft ein Fahrzeug mit einer regelbaren Längskupplung für Allradsysteme zur Verbesserung der Regelgüte. Ja nach Lastzustand, Drehmomentenverteilung zwischen den Achsen und der Achs- bzw. Radlast laufen die Räder der beiden Fahrzeugseiten unterschiedlich.

Aus der DE 198 30 561 C2 ist bereits eine Fahrverhaltensregelung zur Verhinderung einer Schleuder und/oder Abdriftbewegung eines Fahrzeuges und im Besonderen eine Fahrverhaltensregelvorrichtung bekannt. Bei diesem bekannten System wird ein ausgewähltes oder mehrere ausgewählte Räder kontrolliert abgebremst, um ein Anstieg der Abweichungen der Raddrehzahlen zu verhindern.

Des weiteren ist aus der EP 0 999 962 B1 ein Verfahren zur Giermomentenbeeinflussung, bei welchem gefährliche Fahrsituationen, die sich als Folge einer Kurvenfahrt und einer Regelbremsung auf µSplit mit kurvenaußen geringerem Reibwert als kurveninnen einstellen kann. Hier wird zunächst bestimmt, ob es sich um eine Kuvenfahrt handelt und welche Räder dabei die kurveninnenseititgen bzw. die kurvenaußenseitigen Räder sind. Als Ergebnis wird bei diesem bekannten Verfahren eine Beeinflussung des Giermomentes durch kontrolliertes Abbremsen des vorderen inneren Rades vorgenommen. Die DE-A-19523354, als nächstliegender Stand der Technik gesehen, zeigt ein Verfahren zur Regelung des Fahrverhaltens eines Fahrzeugs mit Allradantrieb.

Das vorliegende erfindungsgemäße Verfahren greift zu Vermeidung kritischer Fahrzustände in die Ansteuerung einer regelbaren Längskupplung ein. Damit verbessert dieses Verfahren bei Fahrzeugen mit Allradantrieb die Regelgüte. Auch hier wird zunächst die Drehzahldifferenz zwischen der linken und der rechten Fahrzeugseite bestimmt, und aufgrund dieses Vergleichsergebnisses die Längssperre bestimmt. Mit dieser Maßnahme kann das Regelverhalten der Schlupfregelsysteme am Rad vorteilhaft stabilisiert werden. Es ist weiterhin besonders vorteilhaft, daß zur Erkennung der Fahrsituation die bereits ohnehin vorhandenen Sensoren genutzt und Informationen über ein Bus-System zur Ermittlung der Raddrehzahlen, der Fahrgeschwindigkeit und des Kurvenradius sowie des Antriebsmomentes zwischen den Steuergeräten im Fahrzeug ausgetauscht werden können. Die erfindungsgemäße Regelstrategie kann für Fahrzeuge mit Allradantrieb mit Längskupplung, für ein regelbares Allrad-Hang-on-System und für eine feste Verteilung mit regelbarer Längssperre im Allrad-Antriebsstrang eingesetzt werden.

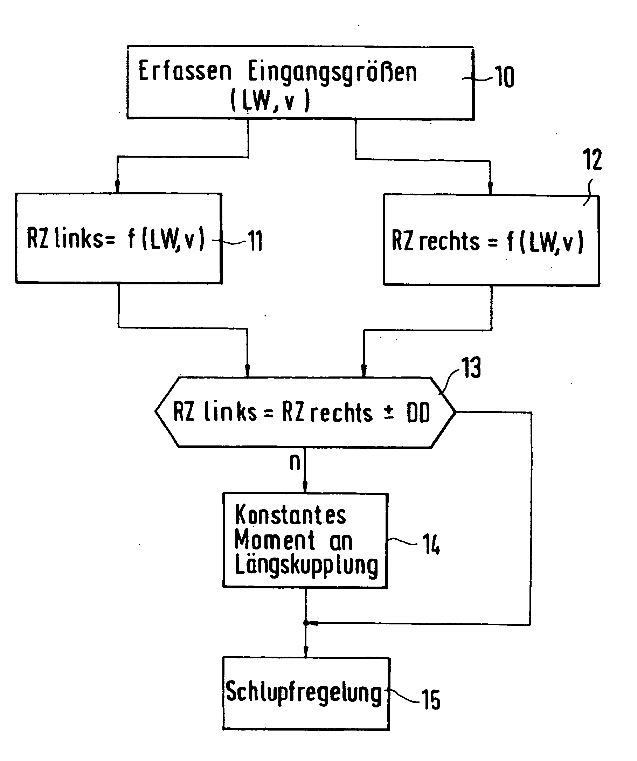

Ein Ausführungsbeispiel der erfindungsgemäßen Ansteuerung ist in der Figur dargestellt und im nachfolgenden näher erläutert.

Die Figur zeigt einen schematischen Ablaufplan zur Durchführung des Verfahrens, wobei in der Figur nur die wesentlichen Verfahrensschritte dargestellt sind, um so eine einfache und übersichtliche Darstellung zu ermöglichen.

In einem ersten Arbeitsschritt 10 werden verschiedene Eingangsgrößen zur Bestimmung der Fahrsituation wie der Lenkwinkel LW und die Geschwindigkeit v des Fahrzeuges erfasst. Anschließend wird in einem Arbeitsschritten 11 aus den Werten von Lenkwinkel LW und Geschwindigkeit v die Raddrehzahl RZ für die linke Fahrzeugseite RZlinks und parallel dazu in einem Arbeitsschritt 12 die Raddrehzahl für die rechte Fahrzeugseite RZrechts ermittelt. Die Raddrehzahl RZ ist eine Größe, in die der Lenkwinkel LW und Geschwindigkeit v eingehen, so dass die Raddrehzahl im wesentlichen als Funktion von Lenkwinkel und Geschwindigkeit beschrieben werden kann, RZ = f (LW, v). Die für die rechte und linke Fahrzeugseite ermittelten Raddrehzahlwerte, werden in einem nachfolgenden Schritt 13 miteinander verglichen. Wenn die Raddrehzahl der linken Seite des Fahrzeuges RZlinks von der Raddrehzahl der rechten Seite des Fahrzeuges RZrechts um mindesten eine vorgebbare Drehzahldifferenz DD abweicht, wird im Arbeitsschritt 14 zunächst ein konstantes Moment an der Längskupplung des Fahrzeuges eingestellt, so dass dann für die anderen Regelsysteme zur Schlupfregelung am Rad konstante Verteilungsverhältnisse zwischen den Achsen vorliegen. lst die Abweichung innerhalb eines vorgebbaren Bereiches DD (Drehzahldifferenz), dann liegt kein Handlungsbedarf zum Einstellen der Längskupplung vor und im Arbeitsschritt 15 wird die vom Steuergerät bestimmte Schlupfregelung eingestellt und sämtliche weiteren Regelungsvorgänge erfolgen entsprechend den vorgegebenen Algorithmen und Standardwerten.

Im vorliegenden beschriebenen Fall wird die Strategie an einem Allradfahrzeug mit fester Drehmomentenverteilung und regelbarer Längssperre eingesetzt. Die Funktion ermittelt in Abhängigkeit von Fahrgeschwindigkeit und Lenkwinkel über die Raddrehzahlen, um welchen Betrag die Räder einer Fahrzeugseite im Mittel zur anderen Fahrzeugseite abweichen. Wird hierbei ein maximal zulässiger Betrag überschritten, wird die Längssperre abhängig von der Fahrgeschwindigkeit und Lenkwinkel auf einen konstanten Wert eingestellt, um für die Schlupfregelsysteme am Rad konstante Verteilungsverhältnisse zu schaffen. Damit wird das Regelverhalten an diesen Systemen deutlich verbessert.

Die eben beschriebene Funktion ist für eine Geradeausfahrt des Fahrzeuges ausgelegt. Bei Überschreiten eines festgelegten Lenkwinkels tritt die Funktion nicht in Kraft, da bei Kurvenfahrten sich unterschiedliche Bahnkurven der kurvenäußeren gegenüber den kurveninneren Rädern ergeben und Ungenauigkeiten in der Schlupfkalkulation bewirken. Um dies zu Vermeiden, wird nach Erkennung einer Kurvenfahrt gemäß eines vorbestimmten Bahnkurvenmodells das Maß ermittelt, um wieviel die kurveninneren Antriebsräder sich langsamer drehen als die kurvenäußeren Antriebsräder. Dieser Wert wird nun als Offset auf die zulässige Abweichungen DD für eine Geradeausfahrt addiert. Hierbei wird das Vorzeichen berücksichtigt, weil bei Kurvenfahrten je nach Reibwertbedingungen kurveninnere wie kurvenäußere Antriebsräder in Schlupf gehen können.

## Patentansprüche

1. Verfahren zur Regelung des Fahrverhaltens von Fahrzeugen mit einer regelbaren Längskupplung für Allradsysteme, wobei zunächst durch Auswertung der Raddrehzahlen in Abhängigkeit von Fahrgeschwindigkeit und Lenkwinkel die Raddrehzahlen der beiden Fahrzeugseiten (RZlinks, RZrechts) separat ermittelt werden, wobei anschließend ein Vergleich dieser beiden Raddrehzahlen erfolgt und wobei bei Überschreiten einer vorgebbaren Drehzahldifferenz (DD) an der Längskupplung ein konstantes Moment in Abhängigkeit von Fahrgeschwindigkeit und Lenkwinkel eingestellt wird.

2. Verfahren nach Anspruch 1, **dadurch gekennzeichnet, daß** die zulässige Drehzahldifferenz in der Applikation ermittelt und für jeden Betriebszustand in einem Kennfeld gespeichert wird.

3. Verfahren nach Anspruch 1, **dadurch gekennzeichnet, daß** der Lenkwinkel auf eine Kurvenfahrt geprüft wird und bei Erkennen einer Kurvenfahrt ein Offset bestimmt wird, der auf die zulässige Drehzahldifferenz der Raddrehzahlen aufgeschlagen wird.

## Claims

1. Method for adjusting the driving behaviour of vehicles with an adjustable longitudinal clutch for all-wheel drive systems, wherein at first the wheel speeds of the two sides of the vehicle (WSleft, WSright) are determined separately by evaluating the wheel speeds as a function of driving speed and steering angle, wherein a comparison is then made between these two wheel speeds, and wherein when a predefinable difference in rotational speed (DD) is exceeded at the longitudinal clutch a constant torque is set as a function of driving speed and steering angle.

2. Method according to Claim 1, **characterized in that** the permissible difference in rotational speed is determined in the application and is stored for each operating state in a characteristic diagram.

3. Method according to Claim 1, **characterized in that** the steering angle is tested to establish whether cornering is taking place and if cornering is detected an offset is determined which is added to the permissible difference in rotational speed between the wheel speeds.

## Revendications

1. Procédé de régulation du comportement routier de véhicules avec un accouplement longitudinal réglable pour des systèmes à quatre roues motrices, dans lequel on détermine d'abord séparément les vitesses de rotation des roues des deux côtés du véhicule (VRgauche, VRdroite) en exploitant les vitesses de rotation des roues en fonction de la vitesse du véhicule et de l'angle de braquage, dans lequel on effectue ensuite une comparaison de ces deux vitesses de rotation des roues et dans lequel, en cas de dépassement d'une différence de vitesse de rotation prédéterminable (DD), on règle à l'accouplement longitudinal un couple constant en fonction de la vitesse du véhicule et de l'angle de braquage.

2. Procédé selon la revendication 1, **caractérisé en ce que** l'on détermine la différence de vitesse de rotation admissible dans l'application et on la mémorise dans un diagramme caractéristique pour chaque situation de conduite.

3. Procédé selon la revendication 1, **caractérisé en ce que** l'on contrôle l'angle de braquage sur une conduite en courbe et, lorsque l'on reconnaît une conduite en courbe, on détermine un décalage qui est ajouté à la différence de vitesse de rotation admissible des vitesses de rotation des roues.
